# FASCICULE DE BREVET EUROPEEN

(11) **EP 3 383 617 B1**
(45) Date de publication et mention de la délivrance du brevet: **25.05.2022**
(21) Numéro de dépôt: 16819346.4
(22) Date de dépôt: 01.12.2016
(51) Int. Cl.: B29C 43/28, B29C 43/24, B29C 48/00, B29C 48/07, B29C 48/08, B29C 48/285, B29C 48/35, B29K 105/10, B29L 7/00, B29L 30/00, B29K 21/00, B29D 30/38

(54) **INSTALLATION DE CALANDRAGE POUR NAPPES DE RENFORT POUR PNEUMATIQUE**
KALANDRIEREINRICHTUNG FÜR VERSTÄRKUNGSLAGEN FÜR REIFEN
CALENDERING FACILITY FOR REINFORCEMENT PLIES FOR TYRES

(30) Priorité: 01.12.2015 FR 1561670
(43) Date de publication de la demande: 10.10.2018
(73) Titulaire: Compagnie Générale des Etablissements Michelin, 63000 Clermont-Ferrand (FR)
(72) Inventeur: HOMBERT, Christophe, 63040 Clermont-Ferrand Cedex 9 (FR); DENAVIT, Franck, 63040 Clermont-Ferrand Cedex 9 (FR); AUBAREDE, Francis, 63040 Clermont-Ferrand Cedex 9 (FR)
(74) Mandataire: Noel, Luminita
(86) Numéro de dépôt international: PCT/FR2016/053176
(87) Numéro de publication internationale: WO 2017/093681

(56) Documents cités:
- EP-A1- 2 301 738
- EP-A1- 2 804 750
- WO-A1-2008/099010
- GB-A- 2 249 521
- US-A- 5 800 657

## Description

L'invention concerne le domaine du calandrage des mélanges d'élastomères plus particulièrement du type comportant des renforts et destinés à la fabrication des pneumatiques.

De manière connue, une nappe de renfort pour pneumatique est formée d'éléments de renfort recouverts de part et d'autre de couches de mélange caoutchouteux dites couches de calandrage de manière à ce que les éléments de renforts ne puissent pas être en contact avec l'extérieur. Le mélange caoutchouteux utilisé peut être le même pour chaque couche ou différent d'une couche à l'autre. Les éléments de renfort sont des câbles métalliques ou des fils textiles qui sont parallèles entre eux et, lorsque assemblés avec les autres nappes constituant un pneumatique, ils sont agencés de manière à former un angle donné avec la circonférence du pneumatique.

La fabrication d'une nappe de renfort se fait, en règle générale, à l'aide d'une calandre comportant deux cylindres de calandrage rotatifs dans l'entrefer desquels circule une nappe de fils de renfort continus, régulièrement espacés les uns des autres, guidée pour venir s'intercaler entre deux nappes continues de mélange caoutchouteux. En passant dans l'entrefer des cylindres de calandrage, les nappes de caoutchouc sont pressées l'une contre l'autre et viennent nourrir les espaces compris entre les fils de renfort de manière à former un ensemble composite de fils de renfort et de caoutchouc.

Une telle nappe de caoutchouc est généralement obtenue avec une autre calandre située en amont et comportant deux cylindres de calandrage rotatifs dont l'entrefer est alimenté par un bourrelet approvisionné par un mélange caoutchouteux transporté par un convoyeur jusqu'au niveau de la calandre. Fonctionnant à satisfaction, il a toutefois été constaté que la largeur des nappes de caoutchouc était nettement supérieure à celle de la nappe de fils de renfort et, de ce fait, les extrémités des nappes doivent être découpées et réintégrées à la calandre. Or, il a été constaté que le fait de travailler plusieurs fois à chaud le mélange issu des extrémités découpées risque d'altérer les propriétés du matériau caoutchouteux de la nappe, et ceci est d'autant plus nuisible que la proportion du mélange à réintroduire entre les cylindres de calandrage est élevée.

Le document JP2004314548 propose une solution à ce problème et décrit un dispositif à deux calandres dans lequel chaque calandre est alimentée en amont à l'aide d'une extrudeuse qui débite à pression atmosphérique et qui est située à distance de l'entrefer des deux cylindres de calandrage. Une telle alimentation permet, certes, de mieux maîtriser la largeur de la nappe calandrée avant de former la nappe de renfort composite, mais à condition de placer chaque extrudeuse à une distance prédéterminée de l'entrefer des deux cylindres qu'elle alimente. Une telle solution pose de problèmes d'agencement des extrudeuses au sein de l'installation, sans lequel la régularité dimensionnelle des nappes obtenues n'est plus respectée.

Le document DE10327679 apporte une solution à ce problème en proposant une installation de calandrage comportant une extrudeuse qui débite directement dans l'entrefer des deux cylindres de calandrage de chaque nappe de caoutchouc. Deux telles extrudeuses sont agencées l'une au-dessus de l'autre de manière à ce que les axes des cylindres de calandrage qu'elles alimentent soient situés dans un même plan vertical. Un cinquième cylindre ayant l'axe de rotation parallèle aux axes de rotation des cylindres de calandrage permet de relier les nappes de caoutchouc et les fils de renfort pour former une nappe composite. Fonctionnant à satisfaction, cette installation comportant des extrudeuses sur deux niveaux s'avère encombrante et l'alimentation des extrudeuses nécessite la présence de plusieurs opérateurs.

Le document EP1572439 décrit une autre installation de calandrage du même type que celle du document précédent, mais comportant un agencement au niveau du sol des deux extrudeuses. Dans cette installation, l'arrivée des fils de renfort se fait toutefois à la verticale, depuis un niveau supérieur, et, de ce fait, elle présente les mêmes inconvénients que celle du document précèdent car plusieurs opérateurs sont nécessaires pour assurer le bon fonctionnement de l'installation.

On connaît par ailleurs du document WO 2008/099010 une installation de calandrage dans laquelle les deux extrudeuses d'alimentation des calandres sont parallèles entre elles et inclinées par rapport au plan de passage de la nappe. De manière similaire au document JP2004314548, les extrudeuses d'alimentation des calandres débitent à pression atmosphérique en formant un bourrelet qui, lui, alimente l'entrefer des cylindres de calandrage. De ce fait, l'installation de ce document présente les mêmes inconvénients que celle du document précédent. Par ailleurs, un tel agencement pose des problèmes d'encombrement de l'installation.

L'invention a pour objectif de pallier aux inconvénients des documents ici décrits et de proposer une installation de calandrage de faible encombrement permettant d'obtenir des nappes de renfort de précision accrue.

Cet objectif est atteint avec une installation de calandrage, en particulier pour la production de nappe de renfort pour pneumatique, qui comporte un bâti, deux extrudeuses d'alimentation en matériau élastomère, un dispositif d'alimentation en fils de renfort pour amener les fils de renfort dans une calandre, la calandre comportant une première paire de rouleaux tournant en sens contraire, avec un premier rouleau de travail et un premier rouleau de mise en forme et une seconde paire de rouleaux tournant en sens contraire avec un deuxième rouleau de travail et un deuxième rouleau de mise en forme, une première filière plate prévue entre la première extrudeuse et la première paire de rouleaux et faisant saillie dans un premier entrefer de calandrage de nappe de caoutchouc défini entre la première paire de rouleaux et une deuxième filière plate prévue entre la seconde extrudeuse et la seconde paire de rouleaux et faisant saillie dans un second entrefer de calandrage de nappe de caoutchouc défini entre la seconde paire de rouleaux, dans laquelle un entrefer de calandrage est formé entre les cylindres de travail pour recevoir une première nappe de caoutchouc calandrée délivrée par la première paire de rouleaux, une seconde nappe de caoutchouc calandrée délivrée par la deuxième paire de rouleaux et les fils de renfort délivrés par le dispositif d'alimentation en fils de renfort pour fournir la nappe de renfort calandrée qui quitte l'installation via des rouleaux de guidage, caractérisée en ce que les deux extrudeuses sont superposées et sont agencées de part et d'autre d'un plan horizontal P passant au niveau des rouleaux de guidage de la nappe de renfort.

L'installation utilise des extrudeuses de matériau élastomère qui débitent dans l'entrefer de rouleaux de calandrage, leur filières faisant saillie dans l'entrefer de calandrage ce qui permet, grâce à une alimentation sous pression, d'obtenir des nappes de gomme ou caoutchouc d'épaisseur bien calibrée et constante tout le long de son fonctionnement

De par l'utilisation de telles extrudeuses, les nappes obtenues ont une bonne précision géométrique (en termes de largeur et d'épaisseur de la nappe) et ceci en régime de travail, à des paramètres préétablis, ou en régime transitoire. De surcroît, les rouleaux de calandrage utilisés sont plus petits et plus faciles à manipuler, en vue des différents réglages, et à entretenir que ceux d'une calandre classique. Les fils de renfort sont ensuite insérés entre deux telles nappes de caoutchouc calandrées amenées dans l'entrefer de calandrage par deux rouleaux adjacents de la calandre.

Par matériau ou mélange élastomère, gomme ou caoutchouc on comprend un mélange cru de polymères thermoplastiques ou élastomères comportant au moins une charge. Les fils de renfort sont des câbles métalliques ou des fils textiles qui sont parallèles entre eux.

La nappe de renfort obtenue avec l'installation de l'invention suit, en sortant de l'entrefer de calandrage, un trajet compris dans un plan horizontal P tangent aux rouleaux de guidage de la nappe de renfort et situés entre les deux extrudeuses. Le plan horizontal de défilement de la nappe de renfort obtenue avec l'installation de l'invention passe au niveau de l'entrefer de calandrage ou il est légèrement décalé par rapport à celui-ci. Les extrudeuses sont superposées en étant agencées de part et d'autre de ce plan horizontal, ce qui assure une structure compacte de l'installation. Par superposées selon l'invention on comprend que les deux extrudeuses sont situées d'un même côté par rapport à un plan vertical passant par l'entrefer de calandrage.

Avantageusement, chaque extrudeuse débite le mélange élastomère dans l'entrefer formé par une paire de rouleaux à une pression supérieure à la pression atmosphérique.

A titre d'exemple, la pression en sortie des extrudeuses est comprise entre 10 et 70 bars. Cette alimentation en pression de l'entrefer des deux rouleaux permet de bien répartir le mélange sur toute la largeur de calandrage de la nappe et d'obtenir ainsi une nappe de caoutchouc de dimensions (largeur et épaisseur) très précises.

De préférence, les deux extrudeuses sont agencées sensiblement à égale distance par rapport au plan horizontal P, pour une structure encore plus compacte de l'installation.

Dans un agencement avantageux de l'invention, l'une des extrudeuses a un axe longitudinal X-X' et l'autre extrudeuse a un axe longitudinal Y-Y' et elles sont agencées de manière à ce que leurs axes X-X' et Y-Y' intersectent le plan horizontal P en formant avec ce plan deux angles qui ont un même sommet et un côté commun.

Ceci permet de ménager plus de place entre les deux extrudeuses par rapport à une variante dans laquelle les extrudeuses seraient parallèles au plan horizontal et les filières inclinées en direction des fils de renfort.

De préférence, les axes X-X' et Y-Y' font un angle compris entre 10° et 90° entre eux. Ceci permet un agencement selon lequel les deux extrudeuses convergent vers le plan P, ce qui permet d'améliorer l'ergonomie de l'ensemble.

Avantageusement, le plan horizontal passant au niveau des rouleaux de guidage est situé à une distance comprise entre 800 et 1400mm par rapport à la base du bâti.

Ceci permet à un seul opérateur placé au niveau du sol de préparer l'installation en vue de l'utilisation et également d'assurer son fonctionnement (par exemple pour surveiller l'alimentation ou pour intervenir sur les réglages) sans dispositif de manutention de ses composants.

De préférence, chaque extrudeuse est agencée de manière à ce que son dispositif d'alimentation soit proche du plan horizontal passant par les rouleaux, pour un meilleur accès de l'opérateur aux trémies d'alimentation des deux extrudeuses.

Avantageusement, chaque extrudeuse forme avec la filière plate et avec les deux rouleaux adjacents un ensemble monté sur un châssis commun. Ceci permet d'obtenir un ensemble unitaire d'extrusion et de calandrage de nappe de caoutchouc. Un tel ensemble unitaire est alors doté de ses propres moyens de réglage et est facile à positionner par rapport aux autres composants de l'installation.

De préférence, les rouleaux adjacents sont maintenus par un support monté fixe sur le châssis commun et l'extrudeuse est mobile axialement par rapport au support. Le support des rouleaux permet d'assurer les fonctions de maintien et de réglage de leur entraxe, tout en rendant l'extrudeuse indépendante et amovible en la déplaçant en translation axiale par rapport au support, notamment dans un but de nettoyage.

Avantageusement, au moins l'une des extrudeuses est montée mobile par rapport au bâti entre une position de travail et une position de repos. Ceci permet de l'écarter de la zone de l'entrefer de calandrage afin de procéder au remplacement des composants constituant la nappe de renfort.

De préférence, le dispositif d'alimentation en fils de renfort comporte un rouleau prévu pour amener les fils de renfort dans la calandre. Un tel rouleau permet de mieux guider les fils de renfort jusqu'à l'entrefer de calandrage et assure une meilleure précision de leur positionnement au sein de la nappe de renfort et ceci surtout lorsqu'il reçoit les fils de renfort d'un rouleau rainuré situé directement en amont.

Avantageusement, ledit rouleau est monté mobile en translation par rapport à la calandre. Ceci permet de l'écarter de l'entrefer de calandrage afin de procéder au maintien de l'installation ou au remplacement de divers composants.

De préférence, l'installation comporte un dispositif de découpe des lisières de la nappe calandrée agencé de manière adjacente à la calandre. Ceci permet d'obtenir des nappes de largeur très précise.

Avantageusement, le dispositif de découpe des lisières comprend deux bras rétractables portant chacun une molette. Ceci permet au dispositif de s'écarter de la calandre lors de l'entretien de celle-ci.

Avantageusement, l'installation comporte une unité de commande et contrôle qui commande le réglage automatique de la géométrie de la nappe de renfort. Ceci permet d'ajuster facilement l'épaisseur de la nappe de renfort, et celle des nappes qui la composent, ainsi que la largeur de celle-ci.

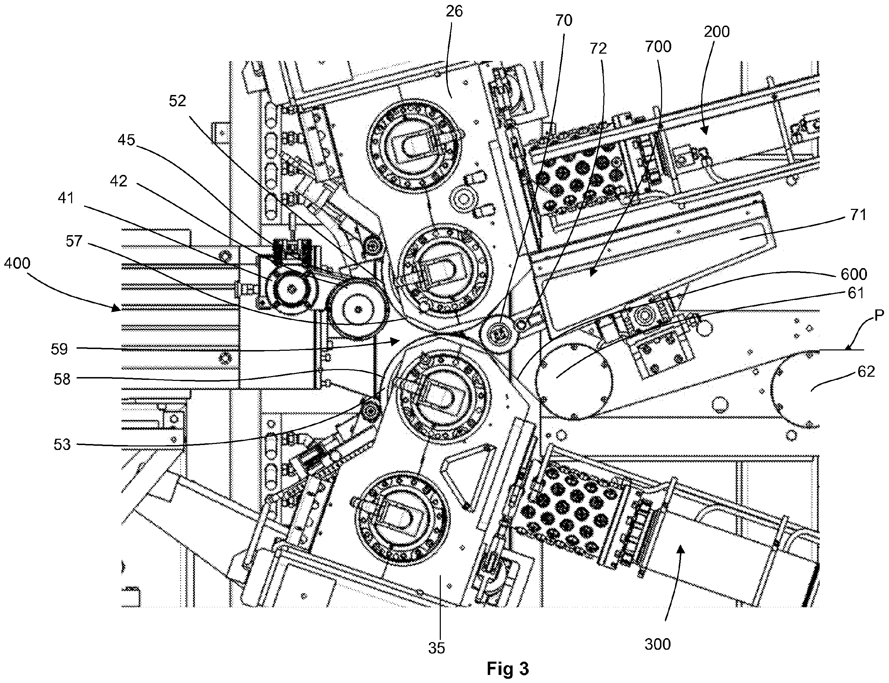

L'invention sera mieux comprise à la lecture des figures 1 à 3 annexées, qui sont fournies à titre d'exemples et ne présentent aucun caractère limitatif, dans lesquelles :
- la figure 1 représente une vue générale schématique en coupe d'une installation de calandrage selon l'invention en position de travail,
- la figure 2 est une vue de face de l'installation de calandrage de l'invention en position de repos,
- la figure 3 est une vue de face à échelle agrandie de la calandre de de l'invention.

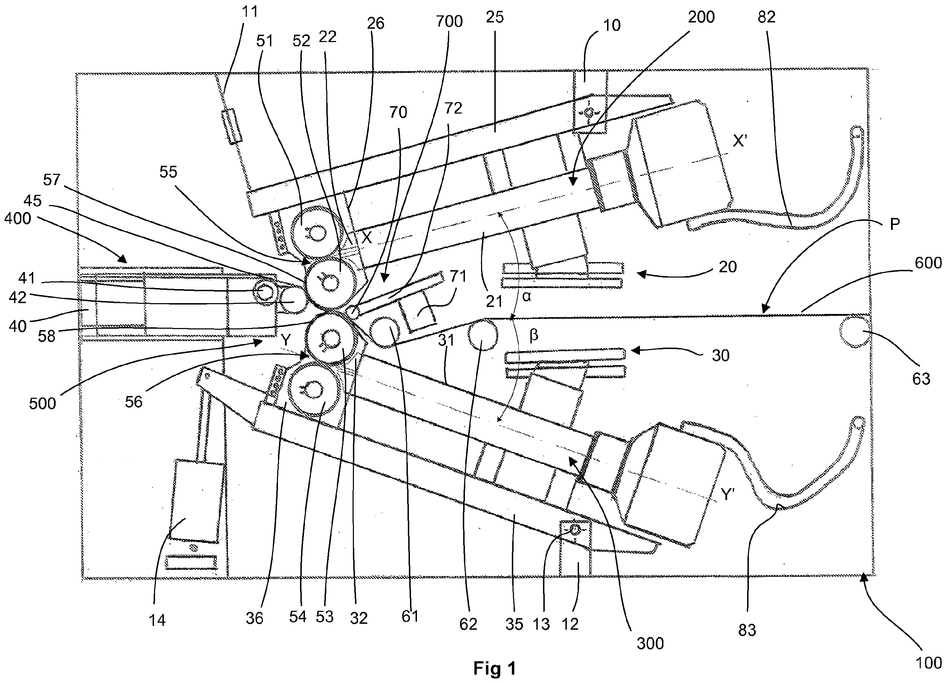

L'installation de calandrage représentée à la figure 1 comprend un bâti commun 100 de support de deux extrudeuses 200, 300 et d'un dispositif d'alimentation en fils de renfort 400, d'un dispositif formant calandre 500 dans lequel est produite la nappe de renfort 600.

Les extrudeuses 200, 300 présentent chacune un dispositif d'alimentation en mélange élastomère 20, 30 qui est travaillé dans un fourreau 21, 31, comportant chacun une vis d'extrusion prévue pour envoyer le matériau élastomère dans une filière plate 22, 32. L'extrudeuse 200 comporte un châssis 25 qui est rigidement fixé sur le bâti 100 à l'aide d'une bride 10 et d'une tige 11. L'extrudeuse 300 comporte un châssis 35 qui est monté mobile par rapport au bâti 100 entre une première position de travail et une deuxième position de repos. Plus particulièrement, le châssis 35 est monté à possibilité de pivotement sous l'action d'un vérin électrique 14 autour d'un axe horizontal 13, situé dans un plan parallèle à celui de la nappe de renfort 600, et supporté au sein d'une bride de fixation 12. Ceci permet de libérer la nappe ou les fils de renfort lors de la préparation de l'opération de calandrage ou à la fin de celle-ci, afin de procéder au nettoyage.

Le fourreau 21, 31 de chaque extrudeuse renferme une vis actionnée en rotation par un motoréducteur qui reçoit l'alimentation en énergie via les câbles d'alimentation 82, 83.

La calandre 500 comprend une première paire de rouleaux 51,52 qui tournent en sens contraires, l'un par rapport à l'autre autour d'axes parallèles entre eux et perpendiculaires à l'axe X-X', et définissent un premier entrefer 55 entre eux, et une deuxième paire de rouleaux 53,54 qui tournent en sens contraires autour d'axes parallèles entre eux et perpendiculaires à l'axe Y-Y' et définissent entre eux un deuxième entrefer 56. Les rouleaux 51,52 ont chacun sa propre motorisation et sont agencés mobiles l'un par rapport à l'autre sur un support 26, dans une direction perpendiculaire à l'axe X-X', de manière à pouvoir régler l'entrefer 55. De manière similaire, les rouleaux 53,54 possèdent chacun sa propre motorisation, sont agencés mobiles sur un support 36, dans une direction perpendiculaire à l'axe Y-Y', de manière à pouvoir régler l'entrefer 56 qu'ils définissent. Le matériau élastomère qui est débité par l'extrudeuse 200 directement dans le premier entrefer 55 entre deux rouleaux 51,52, dont un premier rouleau de travail 52 et un rouleau de mise en forme 51, forme une première nappe de caoutchouc 57. Le matériau élastomère qui est débité par l'extrudeuse 300 directement dans l'entrefer 56 entre les rouleaux 53, 54, dont un rouleau de travail 53 et un rouleau de mise en forme 54, et forme une deuxième nappe de caoutchouc 58.

Avantageusement, chaque extrudeuse 200, 300 débite le mélange élastomère dans l'entrefer formé par chaque paire de rouleaux 51, 52, respectivement 53,54 à une pression supérieure à la pression atmosphérique. A titre d'exemple, la pression en sortie des extrudeuses est comprise entre 10 et 70 bars. Ainsi, on alimente en pression chaque entrefer 55, 56, ce qui permet de repartir le mélange de manière uniforme sur la largeur de la nappe et de pouvoir maîtriser avec précision l'épaisseur de la nappe 57, respectivement 58. Les rouleaux 51, 52, 53, 54 ont un faible diamètre, inférieur à 250 mm, ce qui permet d'appliquer la buse de la filière de sortie de l'extrudeuse de manière étanche proche de l'entrefer. Par ailleurs, la forme et les dimensions de la voûte de l'extrudeuse 200, 300 sont conçues de manière à équilibrer les pressions et les flux sortant de l'extrudeuse sur la largeur de la nappe. Par exemple, la section transversale de la voûte de l'extrudeuse est aplatie au centre et élargie au niveau de ses bords pour atteindre l'effet recherché.

La plage de réglage de l'entrefer 55 et 56 est par exemple comprise entre 0,2 et 4mm. Chaque entrefer 55,56 est réglable de manière indépendante, par exemple en utilisant un vérin électrique qui déplace l'un des deux rouleaux de l'entrefer par rapport à l'autre. Ainsi, l'un des rouleaux, par exemple le rouleau de travail 52, respectivement 53, est monté, avec sa motorisation, sur un support mû par la tige d'un vérin électrique en direction du rouleau de mise en forme 51, 54. Le déplacement du rouleau mobile se fait à partir d'une première position dans laquelle les deux rouleaux 51,52, respectivement 53,54 sont en contact, position qui est détectée par exemple en mesurant l'intensité du courant absorbé par le moteur d'entraînement en rotation du rouleau mobile, jusqu'à une deuxième position qui correspond à la valeur de l'entrefer de calandrage et qui est obtenue par déplacement de la tige du vérin électrique d'actionnement du rouleau mobile. Ceci permet de réaliser des nappes de caoutchouc 57, 58 d'épaisseur variable et très précise, l'épaisseur d'une nappe 57 pouvant être égale ou différente de celle de l'autre nappe 58.

Un entrefer de calandrage 59 est formé entre les rouleaux de travail 52 et 53. La valeur de l'entrefer de calandrage 59 est établie de manière à ce que les nappes de caoutchouc 57, 58 soient pressées l'une contre l'autre pour réaliser des ponts gomme à travers les fils de renfort 45 et former ainsi la nappe de renfort 600. L'entrefer 59 est réglable en fonction de l'effort qui doit être fourni à la nappe de renfort par les rouleaux. Cet effort est mesuré par une jauge de contrainte agencée entre l'extrémité de la tige de vérin 14 et le châssis 36 et la position de la tige du vérin 14 est réglée en conséquence.

Dans l'exemple illustré aux figures, le support 26 est rigidement fixé sur le châssis 25 de l'extrudeuse 200, il supporte la filière plate 22 et les deux rouleaux adjacents 51,52. Il en est de même pour le support 36 qui est rigidement fixé sur le châssis 35 de l'extrudeuse 300 pour supporter la filière plate 32 et les rouleaux adjacents 53,54. Chaque extrudeuse 200, 300 peut être déplacée axialement (on comprend le long de son axe longitudinal) par rapport à sa filière et aux rouleaux adjacents dans un but de nettoyage.

Le dispositif d'alimentation en fils de renfort 400 comprend un support 40 qui reçoit les fils de renfort qui arrivent en provenance de plusieurs bobines (non illustrées sur les dessins) sous forme de plusieurs fils parallèles entre eux, agencés dans un plan horizontal, et les dirige vers un premier rouleau 41 de guidage des fils de renfort 45 qui est rainuré. Le rouleau 41 comporte plusieurs gorges ou rainures circonférentielles espacées entre elles d'un même pas dans la direction axiale du rouleau et destinées à accueillir chacune un fil de renfort. Les fils de renfort 45 sont amenés au voisinage de l'entrefer de calandrage 59 par un deuxième rouleau 42 de pose de fils qui est, lui, lisse et légèrement incliné en direction de l'entrefer de calandrage 59. Les rouleaux 41 et 42 sont agencés avec leurs axes de symétrie parallèles entre eux et parallèles aux axes des rouleaux de calandrage 51, 52, 53 et 54. Le rouleau 42 est disposé à une hauteur supérieure à celle de l'entrefer de calandrage 59 et, de ce fait, la nappe calandrée comportant les fils de renfort 45 est déviée par un premier rouleau de guidage 61 qui lui imprime une trajectoire inclinée, la trajectoire est tangente aux rouleaux 52 et 53 et passe par l'entrefer de calandrage 59. La nappe calandrée 600 est ensuite réorientée par un deuxième rouleau de guidage 62 et par un troisième rouleau de guidage 63, son déplacement entre les rouleaux 62 et 63 se faisant dans un plan P qui est horizontal. Les rouleaux 41 et 42 sont mobiles en translation horizontale ensemble avec leur support 40 par rapport au bâti 100 entre une position de travail et une position de repos, tel qu'il sera expliqué par la suite. Les rouleaux de guidage 61, 62 et 63 sont montés libres en rotation autour des axes parallèles entre eux et parallèles au plan P.

Un dispositif de coupe des lisières 700 est placé à proximité de la sortie de l'entrefer de calandrage 59. Le dispositif de coupe comporte un corps 71 monté fixe sur le bâti 100 et deux bras 72 parallèles portant chacun, à l'une des extrémités, une molette de découpe 70 agencée pour tourner autour d'un axe horizontal. Les bras 72 sont montés à possibilité de déplacement dans le sens de la largeur de la nappe 600 l'un par rapport à l'autre afin de les régler à la largeur finale de la nappe de renfort 600. Les bras 72 sont également réglables de manière à pouvoir s'approcher et s'écarter de la nappe de renfort 600. A titre d'exemple, on peut régler la largeur de la nappe calandrée entre 5 et 200mm avec une précision de +/-0,05mm.

L'installation de calandrage comprend également une unité de commande et contrôle 800 reliée aux différents composants de l'installation dont elle commande le fonctionnement. L'unité de commande et contrôle 800 dispose ainsi de moyens informatiques commandés par au moins un programme d'ordinateur. Ce programme comprend sous forme enregistrée des instructions de code aptes à commander la mise en oeuvre du calandrage lorsqu'il est exécuté sur un ordinateur de l'installation.

En fonctionnement, tel que mieux visible à la figure 1, l'extrudeuse 300 est agencée en position de travail, son support 35 étant amené en position haute par le vérin 14. Le support 40 est poussé en direction de la calandre 500 de manière à ce que la circonférence du deuxième rouleau 42 soit proche de l'entrefer 59 de la calandre 500 Plus particulièrement, le rouleau 42 est appliqué contre la première nappe 57 de manière à venir en contact avec celle-ci. Sa position est avantageusement réglée de manière automatique en fonction de l'épaisseur de la première nappe 57 par un vérin pneumatique (non illustré). Ce vérin est agencé pour déplacer le support 40 en fonction de la pression (mesurée à l'aide d'une jauge de contrainte) que le rouleau 42 exerce sur le rouleau 52. Les extrudeuses 200 et 300 sont alimentées avec des bandes de caoutchouc via leurs orifices d'alimentation 20 et 30 et chaque filière 22, 32 nourrit l'entrefer des rouleaux de calandrage 51,52, respectivement 53,54. Les fils de renfort 45 sont enduits de caoutchouc en provenance des rouleaux 52 et 53 en traversant l'entrefer de calandrage. La nappe de renfort obtenue est entraînée en translation pour sortir de l'installation, en étant orientée par les rouleaux de guidage 61, 62, 63, puis est enroulée en bobine dans un endroit de stockage (non illustré sur les dessins). On obtient ainsi une nappe calandrée d'épaisseur et largeur maîtrisées et qui défile à grande vitesse, la vitesse pouvant être réglée jusqu'à 125m/min.

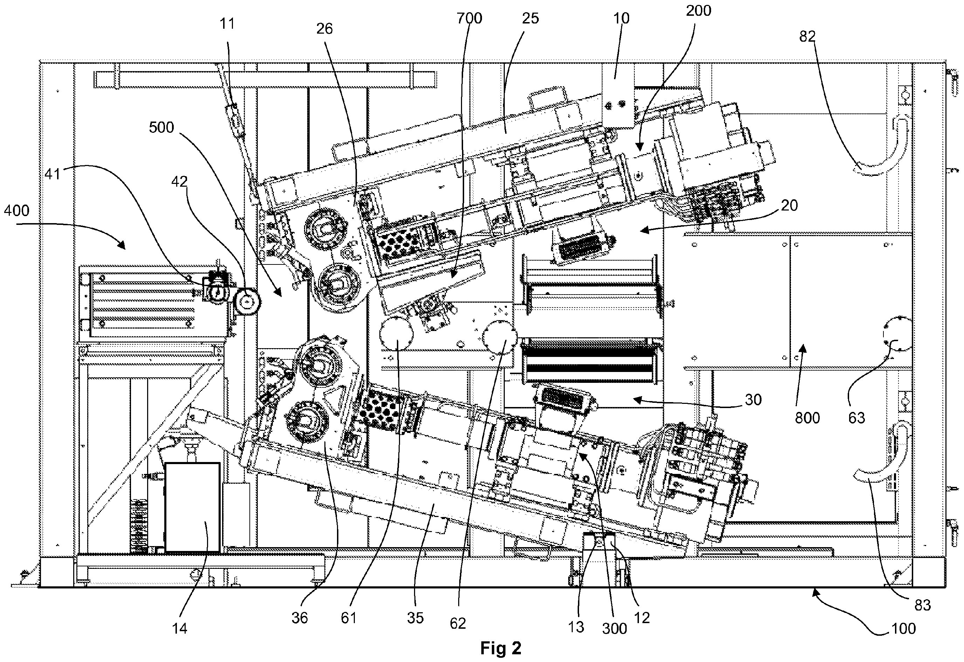

La figure 2 illustre l'installation de calandrage de l'invention en position de repos, on comprend en une position dans laquelle les différents composants ont été déplacés par rapport à leur position de travail, dans un but de nettoyage ou de remplacement des fils de renfort, du mélange élastomère, ou dans un but de nettoyage des extrudeuses 200, 300 ou de remplacement de certains de leurs composants (par exemple la vis d'extrusion ou la filière). Dans la position de repos, l'extrudeuse 300 a été descendue par pivotement en direction du sol en actionnant le vérin 14 et se trouve à distance de l'extrudeuse 200 et du dispositif d'alimentation en fils de renfort 400. Le support 40 du rouleau rainuré 41 a été également écarté de la calandre 500, ainsi que les bras 72 du dispositif de découpe 700. L'opérateur peut ainsi procéder au remplacement des fils de renfort 45, à celui des mélanges d'élastomère en vidant chaque extrudeuse 200, 300, à la maintenance ou au remplacement des divers composants de l'installation.

L'axe longitudinal X-X' de l'extrudeuse 200 et l'axe longitudinal Y-Y' de l'extrudeuse 300 sont inclinés par rapport à un plan horizontal P passant au niveau des rouleaux de guidage 62, 63 de la nappe de renfort 600 et forment chacune un angle a, respectivement β avec celui-ci. L'angle a, respectivement β est compris entre 5 et 45° et est de préférence d'environ 15°. Dans l'exemple illustré aux figures les angles α et β sont égaux et le plan P forme un plan de symétrie pour l'agencement des extrudeuses 200 et 300 en position de travail. Dans une variante, les angles α et β ne sont pas égaux entre eux.

De manière avantageuse, le plan horizontal P est situé à une distance comprise entre 800 et 1400mm de la base du bâti 100. Le bâti 100 de l'installation est généralement posé au sol, ce qui fait que les composants de l'installation sur lesquels un opérateur doit intervenir se trouvent tous à sa portée. Ainsi, il peut procéder à la mise en place des fils de renfort 45 dans les gorges du rouleau rainuré 41, l'alimentation en gomme des extrudeuses via les dispositifs d'alimentation 20, 30, récupération de la gomme des lisières après découpe, ou lors du nettoyage des extrudeuses, etc.

L'installation de calandrage de l'invention permet de régler de manière automatique l'épaisseur de nappes de caoutchouc et l'épaisseur de la nappe de renfort en commandant, via l'unité de commande et contrôle 800, le déplacement des rouleaux 51, 52 ou 53, 54 et celui de l'extrudeuse 300. La largeur de la nappe de renfort 600 est également réglable automatiquement, en réglant la distance entre les mollettes 70 du dispositif de coupe 700. L'installation de calandrage de l'invention est donc facilement adaptable et réglable automatiquement.

Cette installation est également très compacte, de par l'agencement avantageux de ses composants, tout en présentant une bonne ergonomie pour l'opérateur. De surcroît, de par sa construction et compte tenu de la flexibilité des réglages de ses composants, elle permet d'obtenir une nappe de renfort très précise, tout en permettant de choisir et de régler ses dimensions de manière aisée.

Les rouleaux de calandrage 51, 52, 53, 54 sont rigides et ont chacun un diamètre d'environ 250mm. Le diamètre des extrudeuses est d'environ 70mm. Une telle installation permet la fabrication de nappes assez étroites, de largeur comprise entre 5 et 300mm avec une précision accrue. Par ailleurs, de par ses dimensions réduites et l'agencement ergonomique des extrudeuses d'alimentation, l'installation peut être posée directement au sol. Ainsi, l'opérateur placé au sol a facilement et directement accès à la zone de l'entrefer de calandrage sans nécessiter une implantation de l'installation dans une fosse, ni de prévoir un accès en surélévation de l'opérateur, comme dans la plupart des installations connues de l'état de la technique. Par ailleurs, l'opérateur peut accéder facilement par un côté de la machine à l'ensemble des points d'intervention. De surcroît, les différents actionneurs utilisés sont électriques, ce qui facilite la mise en place de l'installation dans l'atelier, par exemple en évitant les branchements sur un réseau hydraulique ou pneumatique.

De par l'agencement avantageux de ses composants et du dimensionnement optimisé de l'ensemble, l'installation de calandrage de l'invention est apte à rentrer dans un conteneur transporté par un semi-remorque, ses dimensions étant inférieures à celles du conteneur.

D'autres variantes et modes de réalisation de l'invention peuvent être envisagés sans sortir du cadre de ces revendications. Ainsi, on peut envisager d'agencer au moins l'une des extrudeuses parallèlement au plan P et l'autre inclinée par rapport à celui-ci.

## Revendications

1. Installation de calandrage pour la production de nappe de renfort (600) pour pneumatique, qui comporte un bâti (100), deux extrudeuses (200, 300) d'alimentation en matériau élastomère, un dispositif d'alimentation en fils de renfort (400) pour amener les fils de renfort (45) dans une calandre (500), la calandre (500) comportant une première paire de rouleaux tournant en sens contraires, avec un premier rouleau de travail (52) et un premier rouleau de mise en forme (51) et une seconde paire de rouleaux tournant en sens contraires avec un deuxième rouleau de travail (53) et un deuxième rouleau de mise en forme (54), une première filière plate (22) prévue entre la première extrudeuse (200) et la première paire de rouleaux (51, 52) et faisant saillie dans un premier entrefer de calandrage de nappe de caoutchouc (55) défini entre la première paire de rouleaux (51, 52) et une deuxième filière plate (32) prévue entre la seconde extrudeuse (300) et la seconde paire de rouleaux (53, 54) et faisant saillie dans un second entrefer de calandrage de nappe de caoutchouc (56) défini entre la seconde paire de rouleaux (53, 54), dans laquelle un entrefer de calandrage (59) est formé entre les cylindres de travail (52, 53) pour recevoir une première nappe de caoutchouc calandrée (57) délivrée par la première paire de rouleaux (51, 52), une seconde nappe de caoutchouc calandrée (58) délivrée par la deuxième paire de rouleaux (53, 54) et les fils de renfort (45) délivrés par le dispositif d'alimentation en fils de renfort (400) pour fournir la nappe de renfort (600) calandrée qui est acheminée vers la sortie de l'installation via des rouleaux de guidage (62,63), **caractérisée en ce que** les deux extrudeuses (200,300) sont superposées et sont agencées de part et d'autre d'un plan horizontal P passant au niveau des rouleaux de guidage (62,63) de la nappe de renfort.

2. Installation selon la revendication 1, **caractérisée en ce que** chaque extrudeuse (200, 300) débite le mélange élastomère dans l'entrefer (55, 56) formé par une paire de rouleaux (51, 52 ; 53, 54) à une pression supérieure à la pression atmosphérique.

3. Installation selon l'une des revendications 1 à 2, **caractérisée en ce que** l'extrudeuse (200) a un axe longitudinal X-X' et l'extrudeuse (300) a un axe longitudinal Y-Y' et elles sont agencées de manière à ce que leurs axes X-X' et Y-Y' intersectent le plan horizontal P en formant avec ce plan deux angles (α, β) qui ont un même sommet et un côté commun.

4. Installation selon la revendication 3, **caractérisée en ce que** les axes X-X' et Y-Y' font un angle compris entre 10° et 90° entre eux.

5. Installation selon l'une des revendications 1 à 4, **caractérisée en ce que** le plan horizontal P passant au niveau des rouleaux de guidage (62,63) est situé à une distance comprise entre 800 et 1400mm par rapport à la base du bâti (100).

6. Installation selon l'une des revendications précédentes, **caractérisée en ce que** chaque extrudeuse (200,300) est agencée de manière à ce que son dispositif d'alimentation (20,30) soit proche du plan horizontal passant par les rouleaux (62,63).

7. Installation selon l'une des revendications précédentes, **caractérisée en ce que** chaque extrudeuse (200 ; 300) forme avec la filière plate (22 ; 32) et avec les deux rouleaux adjacents (51,52 ; 53,54) un ensemble monté sur un châssis commun (25 ; 35).

8. Installation selon l'une des revendications précédentes, **caractérisée en ce que** les rouleaux adjacents (51,52 ; 53,54) sont maintenus par un support (26 ; 36) monté fixe sur le châssis commun (25 ; 35) et que l'extrudeuse (200 ; 300) est mobile axialement par rapport au support (26 ; 36).

9. Installation selon l'une des revendications précédentes, **caractérisée en ce qu'**au moins l'une des extrudeuses (300) est montée mobile par rapport au bâti (100) entre une position de travail et une position de repos.

10. Installation selon l'une des revendications précédentes, **caractérisée en ce que** le dispositif d'alimentation en fils de renfort (400) comporte un rouleau (42) prévu pour amener les fils de renfort (45) dans la calandre (500).

11. Installation selon la revendication 10, **caractérisée en ce que** ledit rouleau (42) est monté mobile en translation par rapport à la calandre (500).

12. Installation selon l'une des revendications précédentes, **caractérisée en ce qu'**elle comporte un dispositif de découpe des lisières (700) de la nappe calandrée (600) agencé de manière adjacente à la calandre (500).

13. Installation selon la revendication 12, **caractérisée en ce que** le dispositif de découpe des lisières (700) comprend deux bras (72) rétractables portant chacun une molette (70).

14. Installation selon l'une des revendications précédentes, **caractérisé en ce qu'**elle comporte une unité de commande et contrôle (800) qui commande le réglage automatique de la géométrie de la nappe de renfort (600).

## Patentansprüche

1. Kalandrieranlage zur Herstellung von Verstärkungslagen (600) für Reifen, die ein Gestell (100), zwei Extruder (200, 300) zum Zuführen von Elastomermaterial, eine Vorrichtung zum Zuführen von Verstärkungsfäden (400), um die Verstärkungsfäden (45) in einen Kalander (500) zu führen, umfasst, wobei der Kalander (500) ein erstes gegensinnig drehendes Walzenpaar mit einer ersten Arbeitswalze (52) und einer ersten Formgebungswalze (51) und ein zweites gegensinnig drehendes Walzenpaar mit einer zweiten Arbeitswalze (53) und einer zweiten Formgebungswalze (54), eine erste flache Düse (22), die zwischen dem ersten Extruder (200) und dem ersten Walzenpaar (51, 52) vorgesehen ist und in einen ersten Kautschuklagenkalandrierspalt (55) hineinragt, der zwischen dem ersten Walzenpaar (51, 52) definiert wird, und eine zweite flache Düse (32), die zwischen dem zweiten Extruder (300) und dem zweiten Walzenpaar (53, 54) vorgesehen ist und in einen zweiten Kautschuklagenkalandrierspalt (56) hineinragt, der zwischen dem zweiten Walzenpaar (53, 54) definiert wird, umfasst, wobei ein Kalandrierspalt (59) zwischen den Arbeitswalzen (52, 53) gebildet wird, um eine erste kalandrierte Kautschuklage (57), die von dem ersten Walzenpaar (51, 52) abgegeben wird, eine zweite kalandrierte Kautschuklage (58), die von dem zweiten Walzenpaar (53, 54) abgegeben wird, und die Verstärkungsfäden (45), die von der Vorrichtung zum Zuführen von Verstärkungsfäden (400) abgegeben werden, aufzunehmen, um die kalandrierte Verstärkungslage (600) auszugeben, die über Führungswalzen (62, 63) zum Auslass der Anlage transportiert wird, **dadurch gekennzeichnet, dass** die beiden Extruder (200, 300) übereinander liegen und beidseits einer horizontalen Ebene P angeordnet sind, die auf Höhe der Führungswalzen (62, 63) der Verstärkungslage verläuft.

2. Anlage nach Anspruch 1, **dadurch gekennzeichnet, dass** jeder Extruder (200, 300) das Elastomergemisch in den durch ein Walzenpaar (51, 52; 53, 54) gebildeten Spalt (55, 56) mit einem Druck fördert, der höher als der Atmosphärendruck ist.

3. Anlage nach einem der Ansprüche 1 bis 2, **dadurch gekennzeichnet, dass** der Extruder (200) eine Längsachse X-X' hat und der Extruder (300) eine Längsachse Y-Y' hat und sie so angeordnet sind, dass ihre Achsen X-X' und Y-Y' die horizontale Ebene P schneiden, wobei sie mit dieser Ebene zwei Winkel (α, β) bilden, die den gleichen Scheitelpunkt und eine gemeinsame Seite haben.

4. Anlage nach Anspruch 3, **dadurch gekennzeichnet, dass** die Achsen X-X' und Y-Y' untereinander einen Winkel zwischen 10° und 90° bilden.

5. Anlage nach einem der Ansprüche 1 bis 4, **dadurch gekennzeichnet, dass** die horizontale Ebene P, die auf Höhe der Führungswalzen (62, 63) verläuft, in einem Abstand zwischen 800 und 1400 mm in Bezug auf die Grundseite des Gestells (100) gelegen ist.

6. Anlage nach einem der vorhergehenden Ansprüche, **dadurch gekennzeichnet, dass** jeder Extruder (200, 300) so angeordnet ist, dass seine Zuführvorrichtung (20, 30) der durch die Walzen (62, 63) verlaufenden horizontalen Ebene nahe ist.

7. Anlage nach einem der vorhergehenden Ansprüche, **dadurch gekennzeichnet, dass** jeder Extruder (200; 300) mit der flachen Düse (22; 32) und mit den beiden benachbarten Walzen (51, 52; 53, 54) eine Einheit bildet, die auf einem gemeinsamen Rahmen (25; 35) montiert ist.

8. Anlage nach einem der vorhergehenden Ansprüche, **dadurch gekennzeichnet, dass** die benachbarten Walzen (51, 52; 53, 54) von einem Träger (26, 36), gehalten werden, der feststehend an dem gemeinsamen Rahmen (25; 35) montiert ist, und dass der Extruder (200; 300) in Bezug auf den Träger (26; 36) axial beweglich ist.

9. Anlage nach einem der vorhergehenden Ansprüche, **dadurch gekennzeichnet, dass** mindestens einer der Extruder (300) in Bezug auf das Gestell (100) zwischen einer Arbeitsstellung und einer Ruhestellung beweglich montiert ist.

10. Anlage nach einem der vorhergehenden Ansprüche, **dadurch gekennzeichnet, dass** die Vorrichtung zum Zuführen von Verstärkungsfäden (400) eine Walze (42) umfasst, die dazu vorgesehen ist, die Verstärkungsfäden (45) in den Kalander (500) zu führen.

11. Anlage nach Anspruch 10, **dadurch gekennzeichnet, dass** die Walze (42) in Bezug auf den Kalander (500) translatorisch beweglich montiert ist.

12. Anlage nach einem der vorhergehenden Ansprüche, **dadurch gekennzeichnet, dass** sie eine Vorrichtung zum Schneiden der Kanten (700) der kalandrierten Lage (600) umfasst, die benachbart zum Kalander (500) angeordnet ist.

13. Anlage nach Anspruch 12, **dadurch gekennzeichnet, dass** die Vorrichtung zum Schneiden der Kanten (700) zwei einziehbare Arme (72) aufweist, die jeweils ein Schneidrad (70) tragen.

14. Anlage nach einem der vorhergehenden Ansprüche, **dadurch gekennzeichnet, dass** sie eine Steuer- und Überwachungseinheit (800) umfasst, die das automatische Einstellen der Geometrie der Verstärkungslage (600) steuert.

## Claims

1. Calendering installation for the production of a reinforcing ply (600) for a tyre, which has a frame (100), two extruders (200, 300) for feeding elastomer material, a reinforcing-thread feeding device (400) for conveying the reinforcing threads (45) into a calender (500), the calender (500) having a first pair of counter-rotating rollers, with a first working roller (52) and a first shaping roller (51), and a second pair of counter-rotating rollers, with a second working roller (53) and a second shaping roller (54), a first flat die (22) that is provided between the first extruder (200) and the first pair of rollers (51, 52) and projects into a first rubber-ply calendering nip (55) defined between the first pair of rollers (51, 52), and a second flat die (32) that is provided between the second extruder (300) and the second pair of rollers (53, 54) and projects into a second rubber-ply calendering nip (56) defined between the second pair of rollers (53, 54), wherein a calendering nip (59) is formed between the working rolls (52, 53) in order to receive a first calendered rubber ply (57) delivered by the first pair of rollers (51, 52), a second calendered rubber ply (58) delivered by the second pair of rollers (53, 54), and the reinforcing threads (45) delivered by the reinforcing-thread feeding device (400) in order to supply the calendered reinforcing ply (600), which is conveyed to the outlet of the installation via guide rollers (62, 63), **characterized in that** the two extruders (200, 300) are superposed and arranged on either side of a horizontal plane P extending at the level of the guide rollers (62, 63) of the reinforcing ply.

2. Installation according to Claim 1, **characterized in that** each extruder (200, 300) outputs the elastomer mixture into the nip (55, 56) formed by a pair of rollers (51, 52; 53, 54) at a pressure greater than atmospheric pressure.

3. Installation according to one of Claims 1 to 2, **characterized in that** the extruder (200) has a longitudinal axis X-X' and the extruder (300) has a longitudinal axis Y-Y' and they are arranged such that their axes X-X' and Y-Y' intersect the horizontal plane P, forming with this plane two angles (α, β) which have one and the same vertex and one common side.

4. Installation according to Claim 3, **characterized in that** the axes X-X' and Y-Y' make an angle of between 10° and 90° with one another.

5. Installation according to one of Claims 1 to 4, **characterized in that** the horizontal plane P extending at the level of the guide rollers (62, 63) is situated at a distance of between 800 and 1400 mm from the base of the frame (100).

6. Installation according to one of the preceding claims, **characterized in that** each extruder (200, 300) is arranged such that its feeding device (20, 30) is close to the horizontal plane extending via the rollers (62, 63).

7. Installation according to one of the preceding claims, **characterized in that** each extruder (200; 300) forms, with the flat die (22; 32) and with the two adjacent rollers (51, 52; 53, 54), an assembly mounted on a common frame (25; 35).

8. Installation according to one of the preceding claims, **characterized in that** the adjacent rollers (51, 52; 53, 54) are held by a bracket (26; 36) mounted in a fixed manner on the common frame (25; 35), and **in that** the extruder (200; 300) is axially movable with respect to the bracket (26; 36).

9. Installation according to one of the preceding claims, **characterized in that** at least one of the extruders (300) is mounted so as to be movable with respect to the frame (100) between a working position and a rest position.

10. Installation according to one of the preceding claims, **characterized in that** the reinforcing-thread feeding device (400) has a roller (42) provided to convey the reinforcing threads (45) into the calender (500).

11. Installation according to Claim 10, **characterized in that** said roller (42) is mounted so as to be movable in translation with respect to the calender (500).

12. Installation according to one of the preceding claims, **characterized in that** it has a device (700) for cutting selvedges of the calendered ply (600), said device (700) being arranged adjacent to the calender (500).

13. Installation according to Claim 12, **characterized in that** the selvedge cutting device (700) comprises two retractable arms (72) that each bear a cutting wheel (70).

14. Installation according to one of the preceding claims, **characterized in that** it has a command and control unit (800) which controls the automatic adjustment of the geometry of the reinforcing ply (600).
